# EUROPEAN PATENT APPLICATION

(11) **EP 3 124 844 A1**
(43) Date of publication of application: **01.02.2017**
(21) Application number: 16177678.6
(22) Date of filing: 04.07.2016
(51) Int. Cl.: F16L 3/205, F16L 3/237, F16L 55/035

(54) **CLIP FOR SECURING AN ELONGATED ARTICLE**

(30) Priority: 27.07.2015 DE 102015112207
(71) Applicant: Newfrey LLC, New Britain, CT 06053 (US)
(72) Inventor: Kumpf, Markus, 35394 Giessen (DE); Rosemann, Frank, 35394 Giessen (DE); Gromes, Christine, 35394 Giessen (DE)
(74) Representative: Witte, Weller & Partner Patentanwälte mbB

(57) **Abstract**

A clip (20) for securing an elongated article (12), such as a pipe, a tube or the like, on a component (14) on which an anchoring device (16) is realized, said clip having an anchor connecting portion (22), which is realized for the purpose of setting up a connection to the anchoring device (16) in order to secure the clip (20) on the component (14), and which defines an anchor axis (A), having an article receiving portion (30) which is realized for the purpose of receiving the article (12) in order to secure the article (12) on the clip (20), wherein the article receiving portion (30) comprises a shell receiving arrangement (32) which is semi-circular in cross section and defines a longitudinal axis (L) which is aligned transversely with respect to the anchor axis (A), and having a coupling portion (40), by means of which the article receiving portion (30) and the anchor connecting portion (22) are connected together in an elastically flexible manner, wherein the coupling portion (40) is realized in one piece with the article receiving portion (30).

In this case, the coupling portion (40) comprises a spring web arrangement (39) which is connected to the article receiving portion (30) such that the article receiving portion (30) is mounted so as to be elastically movable relative to the anchor connecting portion (22) about a vertical axis (H) which is parallel to the anchor axis (A) and/or about a transverse axis (Q) which is aligned transversely with respect to the anchor axis (A) and transversely with respect to the longitudinal axis (L).

## Description

The present invention relates to a clip for securing an elongated article, such as a pipe, a tube or the like, on a component on which an anchoring device such as a stud is realized, said clip having an anchor connecting portion which is realized for the purpose of setting up a connection to the anchoring device in order to secure the clip on the component, and which defines an anchor axis; having an article receiving portion which is realized for the purpose of receiving the article in order to secure the article on the clip, wherein the article receiving portion comprises a shell receiving arrangement which is semi-circular in cross section and defines a longitudinal axis which is aligned transversely with respect to the anchor axis; and having a coupling portion, by means of which the article receiving portion and the anchor connecting portion are connected together in an elastically flexible manner, wherein the coupling portion is realized in one piece with the article receiving portion.

These types of clips are known in general. They serve, for example in vehicle construction, for the purpose of fastening electric lines, fluid lines or the like to the vehicle bodywork. In this connection, an anchoring element such as a stud is frequently joined to a portion of the vehicle body, for example as a result of stud welding, bonding, thermoplastic welding or the like. The anchoring element protrudes on the component. The clip comprises an anchor connecting portion which is placed onto the anchoring element in order to secure the clip with reference to the component. If a stud is used, the anchor connecting portion can comprise, for example, latching tongues which engage in a toothing of the anchoring element in order to secure the clip in a latching manner in this way on the component. However, the anchoring device can be formed not only by an anchoring element, but can also be an opening or bore. In this case, the anchor connecting portion can be formed, for example, by an expanding pin or expanding dowel, or it can be realized as a lamellae receiving means which is inserted into an opening of this type in the component.

In particular in the case of applications such as vehicle construction, these types of clips also serve for the purpose of decoupling the component and the article from one another as regards vibrations. The article becoming detached on account of vibrations can be avoided as a result. The long-term durability of the securing means of the elongated article on the component can be improved.

Essentially two fundamental concepts are known for decoupling with regard to vibrations.

The one concept is based on producing the clip as a two-component part having at least one portion which is produced from a relatively hard material and one portion which is produced from a relatively soft or elastic material. In this case, the anchor connecting portion and the article receiving portion can be produced, for example, from the relatively hard material and the anchor connecting portion and the article receiving portion are connected together by means of elastic elements which form part of a coupling portion.

In this case, connecting or clipping a soft elastic element to a base element by means of a clip connection is known, for example, from document DE 10 2006 031 729 A1. Connecting a bottom part of a clip to a holding part by means of a soft elastic element is known from document EP 1 174 654 B1, a pipe being connected between the bottom part and a top part which is releasably connected to said top part. The top part is provided with an opening which surrounds a shaft of the holding part with radial clearance in order to be able to move the top part axially with reference to the shaft. The disadvantage of these types of two-component clips is that the production thereof is relatively expensive.

In addition, clips which are produced from one single material, in particular as integral components produced from plastics material, are also known. For example, document DE 43 02 408 A1 discloses providing a holding region for partially encompassing a pipe circumference and connecting said holding region by means of at least one resilient web to a support region, by means of which the clip is securable on an anchor.

The support region is connected to a housing portion which protrudes in an L-shaped manner from the support region and inside which the holding region is arranged in the form of an inner shell. Said known one-part holding element enables relative movements between the anchor connecting portion and the article receiving portion only to a limited extent such that not all types of vibrations between the support region and the holding region are able to be isolated.

A similar clip is known from document GB 2 160 576 A.

A further one-part clip, where tongues, which protrude in the axial direction from a housing portion and together form a cone shape, form an article receiving portion, is known from document WO 2010/081735 A1. The axial holding forces of the article that are realizable using such a clip are small in comparison to embodiments which comprise a shell-shaped article receiving portion.

In addition, document EP 2 628 986 A1 makes known a clamp for a pipe where a pipe is inserted into an article receiving portion which includes a shell receiving means which is approximately semi-circular in cross section and is able to cooperate with the pipe over a certain length. Said shell portion is connected by means of a plurality of spring webs to a housing portion which surrounds the shell portion in a U-shaped manner. The spring web arrangement includes a first plurality of spring webs which extend diagonally from one end of the shell receiving means to the other axial side of the housing portion, and a second plurality of spring webs which extend from the other side of the shell receiving means toward the first side of the housing portion, once again in a diagonal manner. The housing portion additionally comprises axial projections which are surrounded by circular projections of the shell receiving means and serve for the purpose of defining the relative mobility between the shell receiving means and the housing portion. An anchor connecting portion is arranged transversely with respect to the longitudinal axis of the shell receiving means and intersects said longitudinal axis.

In the case of the two last-mentioned clips, it can be disadvantageous that the production thereof is comparatively expensive as injection moulding is certainly possible using only one plastics material, however, as a rule, it has to include a complex mould with many movable parts on account of the complex geometries.

Against said background, it is an object of the invention to provide an improved clip which is able to be produced in particular in a cost-efficient manner, is able to absorb the relative vibrations between the article and the component in as many directions as possible or about as many axes as possible and/or is able to realize the high holding forces of the article in the axial direction.

The above object is achieved in the case of the clip mentioned in the introduction in that the coupling portion comprises a spring web arrangement which is connected to the article receiving portion such that the article receiving portion is mounted so as to be movable in an elastically resilient manner relative to the anchor connecting portion about a vertical axis which is parallel to the anchor axis and/or about a transverse axis which is aligned transversely with respect to the anchor axis and transversely with respect to the longitudinal axis.

The anchor connecting portion can be realized as an anchor receiving portion for receiving an anchor element in the form of a stud. The anchor connection portion can also be realized, however, as an expanding pin or expanding dowel or as a lamellae receiving means which is inserted into an opening of the component, in which case the opening forms the anchoring device.

Relative movements between the article and the component in the mounted state can consequently be absorbed to a great extent using the clip according to the invention. It is preferably possible to compensate for relative movements in all directions and around all axes. Where applicable, a certain absorption of the vibrations can also be effected in this connection.

Insofar as relative mobility about an axis is talked about in the present case, this preferably also includes relative movements transversely with respect to such an axis.

The clip according to the invention preferably also enables elastic relative movements between the article receiving portion and the anchor connecting portion around the longitudinal axis.

The longitudinal axis is preferably aligned in a skew manner with respect to the anchor axis, therefore preferably does not intersect the anchor axis. This makes it possible to realize on the anchor connecting portion at least two article receiving portions which are connected to the anchor connecting portion by means of respective coupling portions. The two longitudinal axes defined as a result preferably extend in parallel and on oppositely located sides of the anchor connecting portion.

Generally speaking, the present case only focuses on one article receiving portion in order to simplify the description. However, it is obvious that in all the embodiments one article receiving portion or two article receiving portions can be connected together on an anchor connection portion in an elastically resilient manner by means of one coupling portion or coupling portions.

The shell receiving arrangement which is semi-circular in cross section is realized such that it preferably has a constant cross section in the longitudinal direction such that high holding forces can be realized in the longitudinal direction. The shell receiving arrangement can include one single shell receiving means, but can also comprise two shell receiving portions which are spaced apart in the axial direction.

The coupling portion is preferably realized in one part not only with the article receiving portion but also with the anchor connecting portion such that the clip is able to realized integrally overall.

The spring web arrangement according to the invention is preferably connected to an outside circumferential portion of the article receiving portion, in particular to an outside circumferential portion of a shell receiving arrangement. The spring web arrangement is preferably aligned with respect to the longitudinal axis inclined by an angle which can be within a range of between 10° and 90°, in an ideal manner within the range of between 10° and 45°, in particular within a range of between 10° and 30°.

The coupling portion can in some cases consist purely of the spring web arrangement. The coupling portion preferably also comprises, however, a rigid portion which is connected to the anchor connecting portion, the anchor connecting portion then being connected to the article receiving portion by means of the rigid portion and the spring web arrangement.

A clip which is able to realize high holding forces in the longitudinal direction for the article to be held can be realized overall. In addition, the clip can be produced from one single material. In addition, the form can be developed such that an injection mould with few movable elements is sufficient for production. In addition, it is possible to compensate for vibrations in very many directions.

The object is consequently completely achieved.

According to a particularly preferred embodiment which, in conjunction with the preamble of Claim 1, provides an invention on its own, the coupling portion comprises a spring web arrangement having at least one spring web which is realized in an arcuate manner in cross section, i.e. transversely with respect to the longitudinal axis.

The wide variety of relative movements between the anchor connecting portion and the article receiving portion can be realized as a result of said development. In this connection, the spring web which is arcuate in cross section can realize a good combination between relatively small material thicknesses and relatively high rigidity. In addition, a connection to the outside circumference of the shell receiving portion can be effected such that the connection runs substantially in a radial plane transversely with respect to the longitudinal axis such that pivoting movements about a transverse axis in said radial plane are possible. Where an outside circumference of the shell receiving means is round, a spring web which is straight in cross section would result in too high a rigidity about said transverse axis being realized for a given material thickness. The spring web which is arcuate in cross section is therefore preferably connected to a shell receiving arrangement which is round on the circumference, preferably in an axially central region of the shell receiving arrangement.

A ratio between a radius of the curved shape of the spring web and an outside radius of the article receiving portion can be within a range of between 0.25 and 4, in particular within a range of between 0.9 and 2, preferably by 1.0 and 1.5 and in a particularly preferred manner by 1.1 to 1.4. As a result of said measures, the rigidity of the spring web can easily be adapted to the thickness or the mass of an article to be received.

The spring web arrangement can comprise one single spring web. However, in particular when the outside diameter of a shell receiving means is large, the spring web arrangement preferably includes two spring webs which are spaced over the circumference or a plurality of spring webs which are arranged at a spacing over the circumference.

It is particularly preferred when the spring web arrangement extends over an angle within the range of between 25° and 180°, in particular over a range of between 45° and 180°. Insofar as the spring web arrangement comprises one single arcuate spring web, said spring web preferably extends over an angular range of between 45° and 120°. Insofar as the spring web arrangement comprises two spring webs spaced apart over the circumference, said spring webs preferably extend over an angle within a range of between 20° and 80°, in particular over a range of between 20° and 60°. The overall extension of the spring web arrangement in the circumferential direction is preferably less than 135°.

Generally speaking, it is conceivable for the spring web arrangement to extend directly between the anchor connecting portion and the article receiving portion.

However, it is especially preferred when the clip comprises a housing portion which is rigidly connected to the anchor connecting portion and is arranged around a longitudinal axis of the article receiving portion and/or at a radial spacing from the article receiving portion.

The housing portion, in this case, can be part of the coupling portion. The housing portion preferably extends from one bottom end of the anchor connecting portion in a transverse direction and proceeding from there in a vertical direction such that the housing portion together with a wall of the anchor connecting portion preferably defines a U-shape, in the centre of which runs an axis of the article receiving portion.

In this case introducing the article into the article receiving portion can then be effected via of the U-opening. The U-opening can additionally include locking tongues which yield elastically in the direction toward the U-legs when an article is introduced into the article receiving portion and spring back elastically once the article has been introduced into the article receiving portion, thereby locking a portion of the article receiving portion which is open at the top. The locking tongues, however, preferably do not assume any holding function in the normal state, they just prevent the article being released from the article receiving portion in the event of extreme movements.

An axial length of the housing portion is preferably approximately the same as an axial length of the anchor connecting portion. The anchor connecting portion can be realized, for example, in a substantially cuboid manner, with an axial central opening for receiving a stud or the like. However, for the case where it comprises an expanding dowel or the like, the anchor connecting portion can also comprise, for example, a cuboid attachment which is aligned coaxially with respect to the expanding dowel and, as a result, coaxially with respect to the anchor axis. The housing portion can then be connected, for example, to such a coaxial continuation of an expanding dowel.

In the case of this type of development of the housing portion, said housing portion surrounds the article receiving portion in the circumferential direction in an extensive manner such that, as a result, a protective function can be realized for the article receiving portion. Consequently, the clip can also be mounted in regions which are otherwise exposed to external influence, for example where a stone impact or the like can occur in the case of vehicles.

In the case of the above embodiment, it is especially preferred when the coupling portion connects the housing portion and the article receiving portion together in an elastically flexible manner.

The spring web arrangement used in this connection preferably extends obliquely upward from a cross web of the housing portion in the direction toward the article receiving portion, the article receiving portion preferably defining a vertical axis for the introduction of the article, which axis is aligned parallel to the anchor axis. The spring web arrangement preferably extends obliquely upward proceeding from an axial end of the cross web toward the article receiving portion. It is particularly preferred when the spring web arrangement in a projection in the transverse direction is completely covered by a vertical web of the housing portion. A good protective effect against stone impact can be realized as a result.

According to a further preferred embodiment which, in conjunction with the preamble of Claim 1, provides an invention on its own, a housing portion is connected to the anchor connecting portion, wherein the housing portion is arranged around a longitudinal axis of the article receiving portion and wherein the article receiving portion is connected to the housing portion in such a manner by means of a spring web arrangement that the article receiving portion is at an axial spacing from the housing portion.

In the case of said embodiment, the article receiving portion is consequently arranged in a transverse projection outside the housing portion. This can have technical advantages for the mould as the article receiving portion in the case of said embodiment is able to be realized at a smaller spacing to the locking tongues. In addition, the article receiving portion in the case of said embodiment is preferably provided with lead-in chamfers. In addition, large undercuts can preferably be achieved, a greater variability with regard to the outside diameter to be received by the article receiving portion can be realized by means of lead-in chamfers. It is therefore preferably possible to increase a clamping region, independently of the contour of the locking tongues.

In the case of said embodiment, locking tongues are still preferably realized on the anchor connecting portion and on a vertical web of the housing portion.

In addition, a guide web of the guide web arrangement preferably extends from an axial end of the housing portion in the direction away from the housing portion toward an outside circumferential portion of the article receiving portion.

The housing portion is preferably part of the coupling portion and is preferably connected rigidly to the anchor connecting portion.

As in the case of the above embodiments, the spring web arrangement is preferably realized in an arcuate manner in cross section.

In general, the article receiving portion can comprise one single shell receiving portion.

It is particularly preferred, in the case of said embodiment, when the article receiving portion comprises a shell receiving arrangement produced from two shell receiving portions which are arranged on sides of the housing portion which are located axially opposite.

In the case of said embodiment, the spring web arrangements consequently extend in different directions proceeding from the housing portion.

The shell receiving portions are preferably both at a spacing from the housing portion in the axial direction.

Whereas in the case of embodiments where the article receiving portion comprises one single shell receiving portion a connection to the spring web arrangement is preferably effected in an axially central region of the shell receiving portion, in the case of the present embodiment it is preferred when the spring web arrangement is connected to the axial end of the shell receiving portion which points toward the housing portion. In other words, the shell receiving portions extend in each case from the ends of the spring webs in the axial direction away from the housing portion.

As a result of the bearing arrangement of the article by means of the two shell receiving portions which are at a spacing in the axial direction, there is excellent compensation of vibrations in many directions. In addition, high axial holding forces are able to be realized. The clip is also able to be produced in a cost-efficient manner using inexpensive moulds.

In the case of the embodiment where the article receiving portion is axially spaced from the housing portion, it can be preferred when at least one protective web extends from the housing portion in the axial direction and overlaps the article receiving portion in the axial direction in order to protect said article receiving portion from external influences.

A protective web of this type can be provided, for example, for protecting the spring web arrangement, but can also be provided for protecting the article receiving portion.

In general, it is possible for these types of protective webs to extend in axially opposite directions proceeding from the housing portion in order to protect, in each case, an associated article receiving portion.

According to a further preferred embodiment, a stop is rigidly connected to the housing portion and is realized for the purpose of defining a relative movement between the housing portion and the article receiving portion.

Insofar as the spring web arrangement is aligned axially with the housing portion, a stop of this type can be realized, for example, by a stop face in the region of an inside circumference of the housing portion.

An elevated stop face of this type can be formed, for example, by a rib which protrudes inward in the radial direction in relation to a surface area of a web of the housing portion and from there the spring web arrangement extends toward the article receiving portion.

Insofar as the article receiving portion is spaced from the housing portion in the axial direction, a stop of this type can also be formed by a stop web or stop projection which extends from the housing portion and against which the article receiving portion can be supported in the radial direction in order to realize a stop in this manner.

In addition, it is advantageous overall when the shell receiving arrangement of the article receiving portion extends over an angle of more than 180° and is realized such that the article is able to be received therein in a clamping manner and/or latching manner.

As a result, the article is able to be held therein as a rule purely on account of the elastic holding forces of the article receiving portion. When the article is introduced, the shell receiving arrangement can at the same time expand in the radial direction and then, as a result of elastic resetting, can surround the article over more than 180° such that said article is held securely therein. None the less, locking tongues can be provided on the housing portion and/or on the anchor connecting portion in order to prevent the article being inadvertently pulled out of the article receiving portion.

In the case of the embodiment where an article receiving portion is realized or arranged at a spacing in the axial direction from a housing portion, the connection between the housing portion and the article receiving portion can be effected by means of one single spring web which is preferably realized in an arcuate manner in cross section.

In an alternative variant, the article receiving portion can, however, also be connected to the housing portion by means of webs which extend in the longitudinal direction and are connected to said housing portion on radially opposite sides of the article receiving portion. In this embodiment too, compensatory movements can also be realized in many directions, for example in a horizontal and vertical direction.

It is obvious that the features named above and the features yet to be explained below are usable not only in the combination specified in each case, but also in other combinations or on their own without departing from the framework of the invention.

Exemplary embodiments of the invention are shown in the drawing and are explained in more detail in the following description, in which:
- Fig. 1: shows a schematic view in perspective of a fastening arrangement where an article is secured on a component by means of one embodiment of a clip according to the invention;
- Fig. 2: shows a side view of the clip of Fig. 1;
- Fig. 3: shows a top view of the clip of Fig. 1;
- Fig. 4: shows a longitudinal sectional view of the clip of Fig. 1;
- Fig. 5: shows a representation comparable to Fig. 1 of an alternative embodiment of a clip according to the invention;
- Fig. 6: shows a longitudinal sectional view of the clip of Fig. 5;
- Fig. 7: shows a representation comparable to Fig. 1 of a further embodiment of a clip according to the invention;
- Fig. 8: shows a perspective representation from obliquely below the clip of Fig.7;
- Fig. 9: shows a longitudinal sectional view of the clip of Fig. 7;
- Fig. 10: shows a front view of a housing portion of a further embodiment of a clip according to the invention;
- Fig. 11: shows a sectional view along the line XI-XI of Fig. 10;
- Fig. 12: shows a sectional view along the line XII-XII of Fig. 10;
- Fig. 13: shows a representation comparable to Fig. 1 of a further embodiment of a clip according to the invention;
- Fig. 14: shows a perspective representation from obliquely below the clip of Fig. 13 and
- Fig. 15: shows a longitudinal sectional view through the clip of Fig. 13.

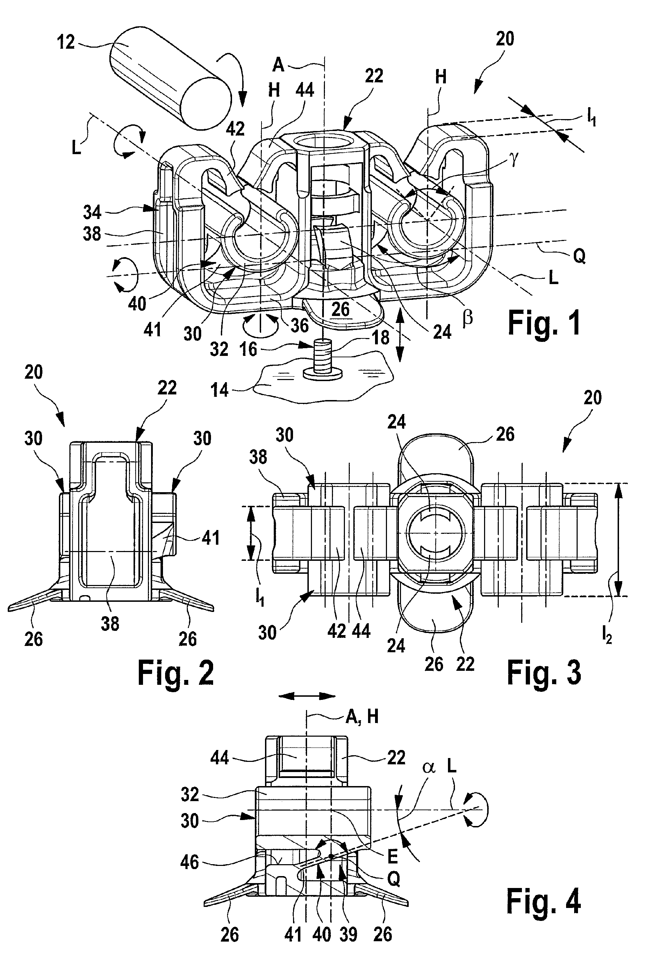

Figs. 1 to 4 show a schematic representation of a fastening arrangement which is given the general reference of 10. The fastening arrangement 10 fastens an elongated article 12, such as a pipe, a tube or the like, on a component 14, which can be a flat component such as a bodywork panel or the like. An anchor in the form of a stud 16, which protrudes in relation to the component 14 along an anchor axis A, is joined to the component 14. A thread 18 can be mounted on the outside circumference of the stud 16. The thread 18 can be a metric thread, but in particular can be a so-called coarse thread.

The fastening arrangement 10 additionally comprises a clip 20. The clip 20 is produced as a plastics material clip, preferably in an injection moulding process. The clip 20 is preferably produced from one single plastics material, therefore preferably does not comprise any soft components such as TPE.

The clip 20 comprises an anchor connecting portion 22 which is essentially realized as a cuboid portion which can be aligned along the anchor axis A, as shown in Fig. 1. The clip 20 can be fastened on the anchor 16 by the clip with the anchor connecting portion 22 being pushed axially along the anchor axis A onto the anchor 16. Latching tongues 24, which can engage behind the thread 18 in order to be able to secure the clip 20 in a captive manner on the component 14, are realized in a manner known per se on the anchor connection portion 22. Elastically deformable supporting lugs 26, by way of which the clip is able to be supported on the face of the component 14, can be realized on the side of the anchor connecting portion 22 facing the component 14. The supporting lugs 26 are elastically deformed in the definitively mounted state such that they exert a force onto the clip 20 in opposition to the opening direction in such a manner that the latching tongues 24 are pressed securely into corresponding threaded grooves. Protection against loss can be increased as a result.

The clip 20 additionally comprises an article receiving portion 30. The article receiving portion 30 includes a shell receiving arrangement 32 which is approximately semi-circular in cross section and is aligned along a longitudinal axis L and comprises a substantially constant cross section along said longitudinal axis L.

The shell receiving arrangement 32 is radially expandable in such a manner that the article 12, in an alignment parallel to the longitudinal axis L, is able to be inserted into the shell receiving arrangement 32, in particular in a latching and/or clamping manner, along a vertical axis H which runs parallel to the anchor axis A. At the same time, the free ends, in the circumferential direction, of the shell receiving arrangement 32 are able to expand in order to receive the article 12 and can spring back elastically in order to hold the article 12 in a secure manner. The shell receiving arrangement 32 cooperates with the outside circumference of the article 12 over substantially its longitudinal extension such that high holding forces are realizable along the longitudinal axis L.

The clip 20 additionally comprises a housing portion 34 which is connected rigidly to the anchor connecting portion 22. The housing portion 34 includes a transverse web 36 which protrudes from the anchor connecting portion 22 parallel to a transverse axis Q which is aligned perpendicular to the anchor axis A and perpendicular to the longitudinal axis L. The transverse web 36 proceeds from a bottom region of the anchor connecting portion 22 and is consequently adjacent and parallel to the component 14 in the fastening arrangement 10. A vertical web 38 of the housing portion 34 extends upward from the free end of the transverse web 36, parallel to the vertical axis H.

The article receiving portion 30 is arranged inside said housing portion 34, the longitudinal axis L extending in a skew manner in relation to the anchor axis A and being arranged approximately centrally between the vertical web 38 and a side wall of the anchor connecting portion 22. In the case of the clip 20, the housing portion 34 surrounds a large part of the article receiving portion 30 and in particular the spring web 14 such that said components are protected against external influences, as can occur, for example when mounted on a bottom surface of a vehicle or in a wheel case (stone impact or the like). The housing portion 34 comprises an axial length 11 which corresponds approximately to the axial length of the anchor connecting portion 22. The article receiving portion 30 comprises an axial length l2 which is longer than the length l1 (compare Fig. 1 and Fig. 3). However, the ratio of 12 to l1 can be 1 or even less than 1.

The article receiving portion 30 with the shell receiving arrangement 32 is connected in an elastically resilient manner to the anchor connecting portion 22 by means a coupling portion 40. The coupling portion 40 includes, in this case, at least part of the housing portion 34 and comprises a spring web arrangement 39 which extends proceeding from the housing portion 34 (on other embodiments possibly also from the anchor connecting portion 22) toward the shell receiving arrangement 32. More precisely, the spring web arrangement 39 in the present case includes one single spring web 41 which is realized in an arcuate manner in cross section (transversely with respect to the longitudinal axis L) in such a manner that a connection between the obliquely extending spring web 41 and the outside circumference of the shell receiving arrangement 32 extends substantially inside a radial plane which is aligned perpendicular to the longitudinal axis L. The radius of the curved form of the spring web 31 is consequently adapted in such a manner to the outside circumference of the shell receiving arrangement 32 so that the connection between them is aligned substantially along such a transverse plane, the transverse plane E coinciding with the transverse axis Q and being aligned parallel to the anchor axis A. A connection of this type between the spring web 41 and the shell receiving arrangement 32 enables pivoting movements of the shell receiving arrangement 32 around the transverse axis Q, as is indicated in Fig. 4.

The spring web 41 is aligned with reference to the longitudinal axis L at an angle α (Fig. 4) which can be within a range of between 10° and 45°, in particular within a range of between 10° and 30°. The spring web 41 extends in the circumferential direction over an angle β (see Fig. 1) which is within a range of between 25° and 180°, in particular within a range of between 45° and 135°.

It is additionally shown in Fig. 1 that the shell receiving arrangement 32 extends in the circumferential direction over an angle 360° - γ, wherein y characterizes the circumferential angle of the radial opening of the shell receiving arrangement 32. The angle γ can be, for example, within the range of between 170° and 60°, in particular within a range of between 135° and 70°.

A first locking tongue 42 extends inward approximately in the radial direction from the free end of the vertical web 38 of the housing portion 34 toward the longitudinal axis L. A corresponding further locking tongue 44 extends in the radial direction toward the longitudinal axis L from an upper region of the anchor connecting portion 22. The locking tongues 42, 44 serve for the purpose of preventing an article 12 being inadvertently pushed out of the shell receiving arrangement 32. The locking tongues 42, 44, however, do not abut against the article 12 when said article is received in a locking or clamping manner in the shell receiving arrangement 32.

Radial expansion of the shell ends is necessary for the latching or clamping reception of the article 1 in the shell receiving arrangement 32 in order to enlarge the angle γ when the article 12 is introduced.

Such radial mobility preferably calls for the sum of the angles β and γ to be less than 300°.

As mentioned, the spring web 41 extends from the article receiving portion 30 at the angle α toward the transverse web 36 of the housing portion 34, toward a radial web which protrudes in relation to the inside surface of the transverse web 36 and the top surface of which forms a stop face 46 for the shell receiving arrangement 32.

As is shown in Fig. 4, the spring web 41 extends obliquely from an upper end of the radial web in the direction toward the outside circumference of the shell receiving arrangement 32.

On account of said development of the coupling portion 40 with the arcuate spring web, the shell receiving arrangement 32 is able to compensate for relative movements between the shell receiving arrangement 32 and the anchor connecting portion 22 in the following directions: rotations around the transverse axis Q, rotations around the longitudinal axis L and rotations around the vertical axis H. Compensatory movements around axes preferably also enable linear compensatory movements in a plane perpendicular to said axis.

Consequently, the achievement overall with the clip 20 is that an article 12 can be held axially with strong forces by the article receiving portion 30. In addition, the clip can be produced from one single material. The moulds necessary for this are comparatively simple to realize and comprise relatively few movable elements. Finally, it is possible to compensate for relative movements between the article receiving portion 30 and the anchor connecting portion 22 in many directions such that vibrations from the component 14 are not transferred directly to the article 12 or vice versa.

The compensatory movements are preferably also damped on account of inner friction in the material of the clip 20.

In the present case, an article receiving portion 30 and a housing portion 34 have been described with reference to the anchor connecting portion 22. As can be seen in particular in Figs. 1 and 3, the clip 20, however, comprises two article receiving portions and two housing portions which are realized in a mirror-symmetrical manner with respect to one another with reference to a plane which runs through the anchor axis A and is parallel to the longitudinal axis L. As an alternative to this, however, just one single article receiving portion 30 and one single housing portion 34 can also be provided. This also applies to all subsequent embodiments which can be realized either with one article receiving portion or with two article receiving portions.

Further embodiments of clips which correspond to the clip 20 of Figs. 1 to 4 as regards design and operation are described in the following Figures. Identical elements are consequently characterized by identical references. It is essentially the differences that are explained below.

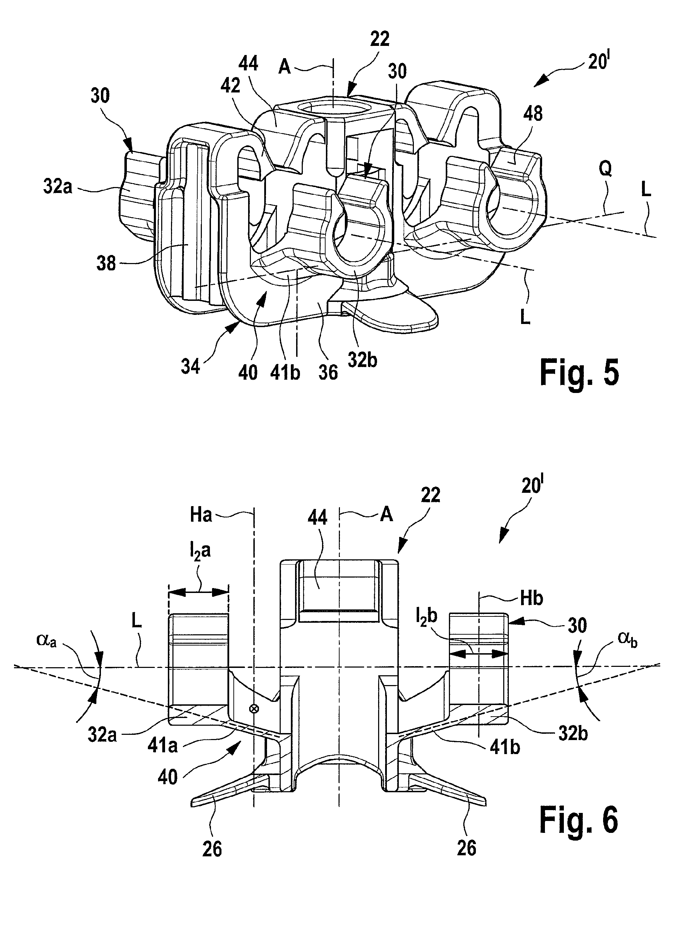

A further embodiment of a clip 20' is shown in Figs. 5 and 6. In this connection, the article receiving portion 30 comprises two shell receiving portions 32a, 32b, which are separated from one another in the axial direction, of a shell receiving arrangement. Each of the shell receiving portions 32a, 32b is also at a spacing in the axial direction from the housing portion 34. The shell receiving portions 32a, 32b are connected to the housing portion 34 by means of respective spring webs 41 a, 41 b, the spring webs 41 a, 41 b extending in each case from oppositely situated axial ends of the housing portion away from the housing portion, as can be seen in particular in Fig. 6. The spring webs 41 a, 41 b extend at opposite angles αa or αb.

The axial lengths l2a or l2b of the shell receiving portions 32a, 32b are in each case shorter than the axial length 11 of the housing portion 34.

As can be seen in particular in Fig. 5, it is possible in the case of said preferable development to provide respective lead-in chamfers 48 on the free edges of the shell receiving portion 32, as a result of which the clamping region for articles 12 is able to be realized in a larger manner than in the case of the shell receiving arrangement 32 of Fig. 1.

In this connection, it is advantageous from the point of view of the moulding technique that the shell receiving portions 32a, 32b are able to be arranged at a smaller spacing from the locking tongue 42, 44, wherein as a result of the lead-in chamfers the so-called clamping region is consequently able to be increased, independently of the contour of the locking tongues 32, 44.

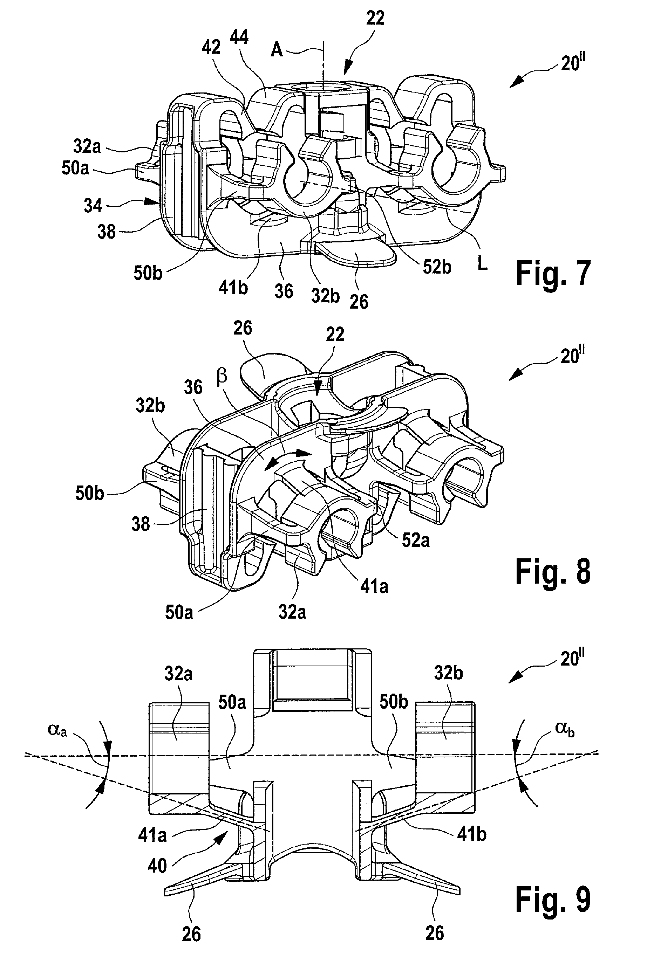

A further embodiment of a clip 20" is shown in Figs. 7 to 9. The clip 20" corresponds in general to the clip 20' of Figs. 5 and 6 with regard to design and operation. In addition to spring webs 41 a, 41 b which are arcuate in cross section, the shell receiving portions 32, 32b are connected to the housing portion 34 or the anchor connecting portion 22 by means of respective longitudinal webs 50 and 52. The longitudinal webs extend approximately in a plane which is aligned parallel to the longitudinal axis L, preferably coincides with the longitudinal axis L and additionally is preferably aligned perpendicular to the anchor axis A. The longitudinal webs 50, 52 extend in each case from a front side of the housing portion 34 or of the anchor connecting portion 22 and extend in the named plane, being bent radially inward at their free end toward the outside circumference of the respective shell receiving portions 32a, 32b.

In addition, in the case of the embodiment of the clip 20" of Figs. 7 to 9, it is provided that, in addition to the longitudinal webs 50, 52, in each case another spring web 41, which is arcuate in cross section, extends from a respective axial side of the housing portion toward the respective shell receiving portion 32. In the case of said embodiment, the spring webs 41a, 41b comprise a circumferential angle β (see Fig. 8) which is preferably less than 90°, in particular is less than 60° and is preferably less than 45°.

The spring webs 41 a, 41 b extend in each case from the axially opposite sides of the housing portion toward bottom edges of the shell receiving portions 32a, 32b. The spring webs 41 a, 41 b in the case of said embodiment can also be realized straight in cross section, they do not therefore have to be realized in an arcuate manner.

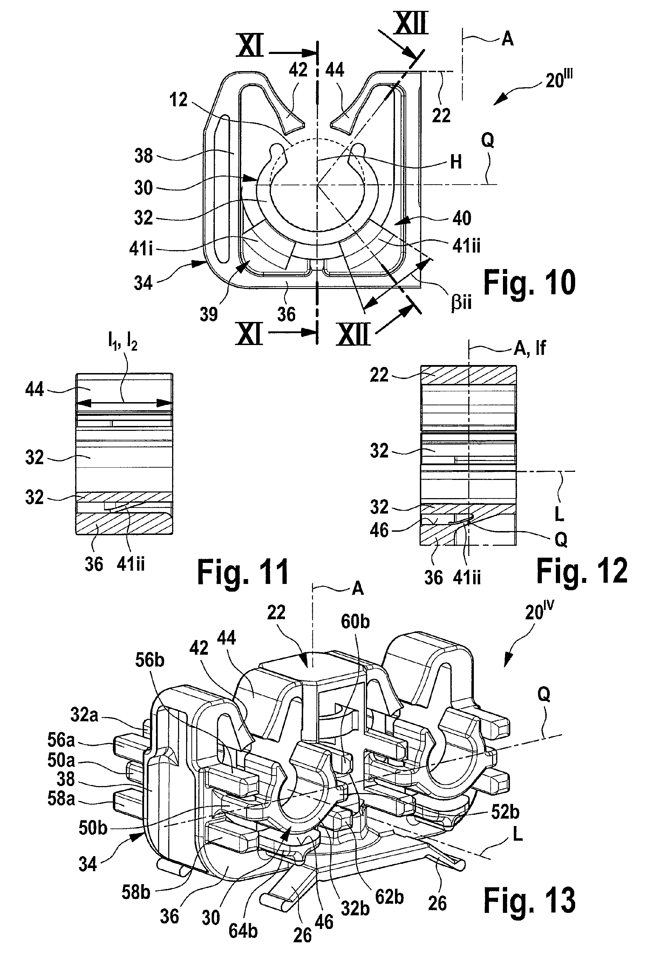

A further embodiment of a clip 20'" is shown in Figs. 10 to 12. The clip 20'" corresponds to the clip 20 in Figs. 1 to 4 as regards design and operation. The shell receiving arrangement 32, however, is realized in a larger manner and is designed to receive articles with larger diameters. In order nevertheless to obtain sufficient mobility of the article receiving portion in particular around the transverse axis Q (see Fig. 12), the spring web arrangement 39 in this case comprises two spring webs 41 i and 41 ii which can extend together over an angle within the range of between 90° and 130°. Each individual spring web preferably extends over an angle β within a range of between 25° and 50°.

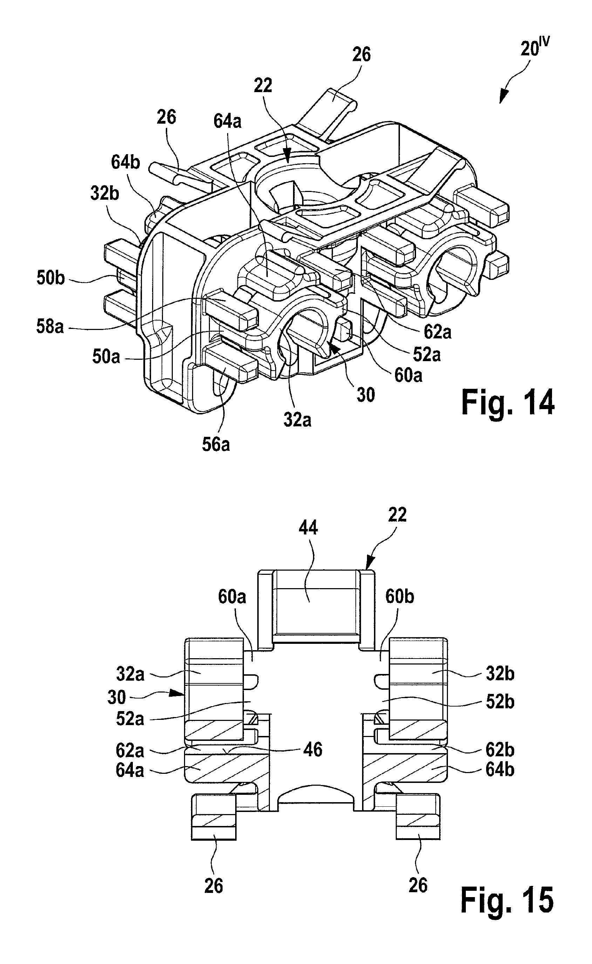

Figs. 13 to 15 show a further embodiment of a clip 20^{IV} which corresponds in general to the clip 20" of Figs. 7 to 9 as regards design and operation.

In the case of said embodiment, however, the shell receiving portions 32a, 32b are connected to the housing portion in each case exclusively by means of longitudinal webs 50, 52, therefore not by means of additional spring webs 41 a, 41 b as in the case of the embodiment of Figs. 7 to 9.

In addition to the embodiment of Figs. 7 to 9, however, protective webs 56, 58, 60, 62, which extend from axial sides of the housing portion in the direction parallel to the longitudinal axis L and are arranged below and/or above the respective longitudinal webs 50, 52 in order to protect the same and the shell receiving portion 32a, 32b thereof from stone impact or another external influence, are provided in the case of the clip 20^{IV}. Protective webs of this type can also be provided in the case of all the other embodiments.

In addition, a stop web 64, which extends from the axial side of the housing portion 34 in the direction parallel to the longitudinal axis L and is realized for the purpose of defining deflections of the shell receiving portions 32a, 32b, in particular in the direction parallel to the anchor axis A toward the bottom surface of the clip 20^{IV}, is provided in each case below the respective shell receiving portions 32a, 32b.

The stop webs 64a, 64b also serve additionally for protecting the associated shell receiving portion 32a, 32b from external influences.

## Claims

1. Clip (20) for securing an elongated article (12), such as a pipe, a tube or the like, on a component (14) on which an anchoring device (16) is realized, said clip having
- an anchor connecting portion (22), which is realized for the purpose of setting up a connection to the anchoring device (16) in order to secure the clip (20) on the component (14) and which defines an anchor axis (A),
- an article receiving portion (30) which is realized for the purpose of receiving the article (12) in order to secure the article (12) on the clip (20), wherein the article receiving portion (30) comprises a shell receiving arrangement (32), which is semi-circular in cross section and defines a longitudinal axis (L) which is aligned transversely with respect to the anchor axis (A), and
- a coupling portion (40), by means of which the article receiving portion (30) and the anchor connecting portion (22) are connected together in an elastically flexible manner, wherein the coupling portion (40) is realized in one piece with the article receiving portion (30),
**characterized in that**
the coupling portion (40) comprises a spring web arrangement (39) which is connected to the article receiving portion (30) such that the article receiving portion (30) is mounted so as to be movable in an elastically resilient manner relative to the anchor connecting portion (22) about a vertical axis (H) which is parallel to the anchor axis (A) and/or about a transverse axis (Q) which is aligned transversely with respect to the anchor axis (A) and transversely with respect to the longitudinal axis (L).

2. Clip according to Claim 1 or according to the preamble of Claim 1, **characterized in that** the coupling portion (40) comprises a spring web arrangement (39) having at least one spring web (41) which is realized in an arcuate manner in cross section.

3. Clip according to Claim 1 or 2, **characterized in that** the spring web arrangement (39) extends over an angle (β) within the range of between 25° and 180°.

4. Clip according to one of Claims 1 - 3, **characterized in that** the clip (20) comprises a housing portion (34) which is rigidly connected to the anchor connecting portion (22) and is arranged around a longitudinal axis (L) of the article receiving portion (30) and/or at a radial spacing from the article receiving portion (30).

5. Clip according to Claim 4, **characterized in that** the coupling portion (40) connects the housing portion (34) and the article receiving portion (30) together in an elastically flexible manner.

6. Clip according to one of Claims 1 - 5 or according to the preamble of Claim 1, **characterized in that** a housing portion (34) is connected to the anchor connecting portion (22), wherein the housing portion (34) is arranged around a longitudinal axis (L) of the article receiving portion (30) and wherein the article receiving portion (30) is connected to the housing portion (34) in such a manner by means of a spring web arrangement (39) that the article receiving portion (30) is at an axial spacing from the housing portion (34).

7. Clip according to Claim 6, **characterized in that** the article receiving portion (30) comprises a shell receiving arrangement produced from two shell receiving portions (32a, 32b) which are arranged on sides of the housing portion (34) which are located axially opposite.

8. Clip according to Claim 6 or 7, **characterized in that** at least one protective web (56 - 62) extends from the housing portion (34) in the axial direction and overlaps the article receiving portion (30) in the axial direction in order to protect said article receiving portion from external influence.

9. Clip according to one of Claims 4 - 8, **characterized in that** a stop (46; 64) is rigidly connected to the housing portion (34) and is realized for the purpose of limiting a relative movement between the housing portion (34) and the article receiving portion (30).

10. Clip according to one of Claims 1 - 9, **characterized in that** the shell receiving arrangement (32) of the article receiving portion (30) extends over an angle (360° - y) of more than 180° and is realized such that the article is able to be received therein in a clamping manner and/or latching manner.
